# EUROPÄISCHE PATENTSCHRIFT

(11) **EP 1 772 475 B1**
(45) Veröffentlichungstag und Bekanntmachung des Hinweises auf die Patenterteilung: **24.03.2010**
(21) Anmeldenummer: 06120373.3
(22) Anmeldetag: 08.09.2006
(51) Int. Cl.: C08G 77/06, C08G 77/16, C08G 77/18

(54) **Verfahren zur Herstellung von Organopolysiloxanen**
Method for the preparation of organopolysiloxanes
Procédé pour la préparation des organopolysiloxanes

(30) Priorität: 04.10.2005 DE 102005047394
(43) Veröffentlichungstag der Anmeldung: 11.04.2007
(73) Patentinhaber: Wacker Chemie AG, 81737 München (DE)
(72) Erfinder: Ackermann, Hartmut, 84489 Burghausen (DE)
(74) Vertreter: Budczinski, Angelika

(56) Entgegenhaltungen:
- DD-A1- 228 550

## Beschreibung

Die Erfindung betrifft ein kontinuierliches mehrstufiges Verfahren in einem Loop-Reaktor mit Naturumlauf zur Herstellung von Organopolysiloxanen durch Hydrolyse und Kondensation von Chlorsilanen.

Verfahren zur kontinuierlichen Herstellung von Organopolysiloxanen sind bereits bekannt. Hierzu sei z.B. auf DE 198 00 023 A verwiesen, bei dem eine mehrstufige Hydrolyse von Vollalkoxylat in Toluol mit Salzsäure beschrieben wird. Des Weiteren wird in DE 32 02 558 A ein kontinuierliches Verfahren zur Herstellung von Siloxanen beschrieben unter Einsatz von Chlorsilan und verdünnter Salzsäure. Ferner wird in DD 228 550 die Verstellung von Siliconbaren aus Methyltrichlorsilan beschrieben.

Gegenstand der vorliegenden Erfindung ist ein Verfahren zur Herstellung von Organopolysiloxanen, bei dem
in einem ersten Schritt kontinuierlich Chlorsilane mit 0,01 bis 0,7 Mol Wasser je Mol hydrolysierbaren Chlors und mit 0,2 bis 1,7 Mol Alkohol je Mol hydrolysierbaren Chlors umgesetzt werden, wobei das Molverhältnis Wasser zu Alkohol 0,005 bis 3,5 beträgt,
in einem zweiten Schritt das in der ersten Stufe erhaltene Reaktionsgemisch kontinuierlich gegebenenfalls mit einem in Wasser unlöslichen organischen Lösungsmittel mit einer Dichte von unter 0,9 kg/l vermengt und Wasser in Mengen von 0,2 bis 100 Mol Wasser je Mol Silicium-Komponente kontinuierlich zudosiert wird und
in einem dritten Schritt nach Beendigung der Reaktion des zweiten Schritts die wässrig-alkoholische Phase abgetrennt wird.

Im Rahmen der vorliegenden Erfindung sollen von dem Begriff Organopolysiloxane sowohl polymere, oligomere wie auch dimere Siloxane mitumfasst werden.

Bei den im ersten Schritt des erfindungsgemäßen Verfahrens eingesetzten Chlorsilanen handelt es sich vorzugsweise um solche der Formel

RₐSiCl₄₋ₐ (I),

wobei R gleich oder verschieden sein kann und einen einwertigen, SiC-gebundenen, gegebenenfalls substituierten Kohlenwasserstoffrest bedeutet und a 0, 1, 2, 3 ist.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α-und der β-Phenylethylrest.

Beispiele für substituierte Reste R sind alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Bevorzugt handelt es sich bei Rest R um Kohlenwasserstoffreste mit 1 bis 8 Kohlenstoffatomen, besonders bevorzugt um den Methyl-, den Isooctyl- und den Phenylrest, insbesondere den Methylrest.

Beispiele für Silane der Formel (I) sind Methyltrichlorsilan, Dimethyldichlorsilan, Trimethylchlorsilan, Tetrachlorsilan, Phenyltrichlorsilan, Diphenyldichlorsilan, Methylphenyldichlorsilan, Isooctyltrichlorsilan.

Die im erfindungsgemäßen Verfahren eingesetzten Silane sind bevorzugt bei 20°C und einem Druck von 900 bis 1100 hPa flüssig.

Bevorzugt werden Mischungen von Silanen der Formel (I) mit mindestens einem Trichlorsilan eingesetzt.

Im Rahmen der vorliegenden Erfindung soll unter hydrolysierbarem Chlor das Chlor verstanden werden, das in Form von SiCl-Gruppen vorliegt.

Im ersten Schritt des erfindungsgemäßen Verfahrens werden Chlorsilane mit bevorzugt 0,01 bis 0,65 Mol, besonders bevorzugt 0,01 bis 0,6 Mol, Wasser je Mol hydrolysierbaren Chlors umgesetzt.

Im ersten Schritt des erfindungsgemäßen Verfahrens werden Chlorsilane mit bevorzugt 0,35 bis 1,5 Mol, besonders bevorzugt 0,4 bis 1,4 Mol, Alkohol je Mol hydrolysierbaren Chlors umgesetzt.

Im ersten Schritt des erfindungsgemäßen Verfahrens wird Wasser zu Alkohol im Molverhältnis von bevorzugt 0,006 bis 2,0 eingesetzt.

Beispiele für Alkohole, die im ersten Schritt des erfindungsgemäßen Verfahrens eingesetzt werden, sind alle bei einer Temperatur von 20°C und einem Druck zwischen 900 und 1100 hPa flüssigen Alkohole, wie Methanol, Ethanol, Propanol, Butanol, Pentanol, Hexanol, Heptanol, Octanol bzw. deren Isomere, wobei Methanol, Ethanol und Butanol bevorzugt und Ethanol besonders bevorzugt sind.

Falls erwünscht, können im ersten Schritt des erfindungsgemäßen Verfahrens zusätzlich zu Chlorsilanen, Wasser und Alkohol auch weitere Stoffe eingesetzt werden, was jedoch nicht bevorzugt ist. Beispiele für gegebenenfalls eingesetzte weitere Stoffe sind wasserunlösliche organische Lösungsmittel, wie Toluol, oder Alkoxysilane, wie Tetraethoxysilan.

Der erste Schritt des erfindungsgemäßen Verfahrens wird vorzugsweise bei einer Temperatur von 0 bis 100°C, insbesondere 20 bis 70°C, und einem Druck von bevorzugt 900 und 2000 hPa, besonders bevorzugt 1000 bis 1500 hPa, durchgeführt.

Im ersten Schritt des erfindungsgemäßen Verfahrens werden Silan, Wasser, Alkohol und gegebenenfalls weitere Stoffe auf beliebige Art und Weise vermischt und reagieren gelassen, wobei Chlorwasserstoff, Alkylchlorid und Dialkylether entstehen. Dabei kann das im ersten Schritt anfallende Chlorwasserstoffgas direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Der erste Schritt des erfindungsgemäßen Verfahrens wird in einem Loop-Reaktor durchgeführt mit Naturumlauf.

Bei der im ersten Schritt erhaltenen Reaktionsmischung besteht die Silicium-Komponente im Wesentlichen aus chlor-, hydroxy- und alkoxyfunktionellen Silanen und Siloxanen sowie gegebenenfalls Cyclosiloxanen. Des Weiteren enthält die Reaktionsmischung Wasser, Alkohol, Chlorwasserstoff und in geringen Mengen Alkylchlorid, Dialkylether und gegebenenfalls weitere Stoffe.

Im Rahmen der vorliegenden Erfindung sollen sich Angaben über die Dichte auf eine Temperatur von 20°C und den Druck der umgebenden Atmosphäre, also 900 bis 1100 hPa, beziehen.

Als in Wasser unlösliche organische Lösungsmittel sollen im Rahmen der vorliegenden Erfindung solche Lösungsmittel verstanden werden, bei denen die Löslichkeit bei 25°C und dem Druck der umgebenden Atmosphäre, also zwischen 900 und 1100 hPa, unter 1 g Lösungsmittel/100 g Wasser liegt.

Beispiele für im erfindungsgemäßen Verfahren gegebenenfalls eingesetzte in Wasser unlösliche organische Lösungsmittel sind gesättigte Kohlenwasserstoffe wie Pentan, Hexan, Heptan oder Octan sowie deren verzweigte Isomere und Mischungen der gesättigten Kohlenwasserstoffe, ungesättigte Kohlenwasserstoffe wie Hexen, Hepten, Octen und 1-Decen, Ketone wie Aceton, Methylethylketon, Methyl-iso-butylketon und aromatische Kohlenwasserstoffe wie Benzol, Toluol und Xylole, wobei es sich bevorzugt um Toluol handelt.

Falls im zweiten Schritt des erfindungsgemäßen Verfahrens wasserunlösliches organisches Lösungsmittel eingesetzt wird, handelt es sich um Mengen von bevorzugt 1 bis 100 Mol, besonders bevorzugt 2 bis 90 Mol, jeweils bezogen auf ein Mol Silicium-Komponente. Bevorzugt wird im zweiten Schritt in Wasser unlösliches organisches Lösungsmittel eingesetzt.

Falls erwünscht, können im zweiten Schritt des erfindungsgemäßen Verfahrens auch weitere Stoffe eingesetzt werden. Beispiele für gegebenenfalls eingesetzte weitere Stoffe sind Chlorsilane, wie etwa solche der Formel (I), oder Alkoxysilane, wie z.B. Tetraalkoxysilan, Isooctyltriethoxysilan, oder Alkohole wie z.B. Ethanol. Falls weitere Stoffe in der zweiten Stufe eingesetzt werden, handelt es sich um Mengen von bevorzugt 0,01 bis 40 Gewichtsteilen, bezogen auf 100 Gewichtsteile der im ersten Schritt eingesetzten Silicium-Komponente.

Im zweiten Schritt des erfindungsgemäßen Verfahrens wird die Silicium-Komponente des im ersten Schritt erhaltenen Reaktionsgemischs sowie gegebenenfalls eingesetzte weitere Stoffe bis zum gewünschten Polymerisationsgrad durch gezielte Wasserzugabe hydrolysiert und kondensiert.

In einer bevorzugten Ausführungsform des erfindungsgemäßen Verfahrens wird im zweiten Schritt das im ersten Schritt erhaltene Reaktionsgemisch gegebenenfalls mit Toluol vermengt und Wasser über einen definierten Zeitraum zudosiert, wobei der Mischungsvorgang mittels Eintrag von mechanischer Energie durchgeführt wird.

In einer besonders bevorzugten Ausführungsform des erfindungsgemäßen Verfahrens wird der zweite Schritt in einem Loop-Reaktor und einem in der Loop integrierten Entgasungsbehälter durchgeführt (z.B. mit einem Gesamtinnenvolumen von 1,6 m³), indem das im ersten Schritt erhaltene Reaktionsgemisch (z.B 500 l/h), Wasser (z.B. 100 l/h), gegebenenfalls Toluol (z.B 685 1/h) sowie gegebenenfalls weitere Komponenten (z.B. 37 kg/h) in Strömungsrichtung vor der Umwälzpumpe (z.B. mit einer Leistung von 1700 Upm) kontinuierlich eindosiert werden. Dabei kann im Entgasungsbehälter, falls erwünscht, gleichzeitig gerührt werden.

Der zweite Schritt des erfindungsgemäßen Verfahrens wird vorzugsweise bei einer Temperatur von 0 bis 100°C, insbesondere 20 bis 80°C, und einem Druck von bevorzugt 900 und 2000 hPa, besonders bevorzugt 1000 bis 1500 hPa, durchgeführt.

Die im zweiten Schritt ablaufende Hydrolyse- bzw. Kondensationsreaktion kann nach beliebigen Verfahren beendet werden, wie z.B. Verdünnen mit Wasser oder Neutralisation mit Base, wie z.B. Natronlauge.

Im dritten Schritt des erfindungsgemäßen Verfahrens erfolgt die Trennung der Siloxanphase von der wässrig-alkoholischen Chlorwasserstoffphase. Dies kann nach dem Fachmann bekannten Methoden erfolgen, wie z.B. kontinuierlich in einem liegenden Behälter, wobei auf der einen Seite das Reaktionsgemisch eindosiert wird und auf der anderen Seite die obere von der unteren Phase voneinander getrennt abgeführt werden kann.

Die so erhaltene Siloxanphase kann nun nach beliebigen und an sich bekannten Verfahren aufgearbeitet werden, wie z.B. Neutralisation, Filtration oder Abtrennung aller leichtflüchtigen Bestandteile, bevorzugt durch Destillation. Bei den leichtflüchtigen Bestandteilen handelt es sich bevorzugt um niedermolekulare cyclische Siloxane und um das in Wasser unlösliche organische Lösungsmittel mit einer Dichte von unter 0,9 kg/l. Des Weiteren kann man beispielsweise bei der Siloxanphase durch Entfernen des Lösungsmittels, etwa durch Destillation in einem Dünnschichtverdampfer, die Konzentration erhöhen und so Organopolysiloxanlösungen herstellen oder das Lösungsmittel ganz entfernen und so lösemittelfreie Siloxane erhalten.

Nach dem erfindungsgemäßen Verfahren kann eine Vielzahl von Organopolysiloxanen mit definierten Eigenschaften reproduzierbar hergestellt werden, wie z.B. solche, die SiC-gebundene Reste, Hydroxyreste und/oder Alkoxyreste enthalten. Insbesondere ist das erfindungsgemäße Verfahren hervorragend geeignet zur Herstellung von Organopolysiloxanharzen.

Die erfindungsgemäß hergestellten Organopolysiloxane können bei 20°C und einem Druck von 900 bis 1100 hPa fest oder flüssig sein und haben ein durchschnittliches Molekulargewicht gegen Polystyrolstandard gemessen von vorzugsweise 162 bis 100 000 g/mol, besonders bevorzugt 200 bis 80 000 g/mol.

Die erfindungsgemäß hergestellten Organopolysiloxane sind zumindest zum Teil, vorzugsweise jedoch ganz, löslich in Alkoxy- und/oder Hydroxysilanen und/oder deren Kondensaten.

Bevorzugt handelt es sich bei den erfindungsgemäß hergestellten Organopolysiloxanen um solche der Formel

[RSiO_{3/2}]_{g}[R₂SiO]_{b}[R₃SiO_{1/2}]_{c}[SiO_{4/2}]_{d}[R¹O_{1/2}]ₑ[HO_{1/2}]_{f}

mit R gleich Methyl-, Isooctyl- oder Phenylrest, R¹ gleich Methyl-, Ethyl- und Butylrest, g=2-200, b=0-100, c=0-50, d=0-100, e=0-20 und f=0-10.

Beispiele für die erfindungsgemäß hergestellten Organopolysiloxane sind [MeSiO_{3/2}]_{35,1}[Me₂SiO]_{4,2}[EtO_{1/2}]_{3,3}[HO_{1/2}]_{1,5},
[MeSiO_{3/2}]_{40,7} [Me₂SiO]_{4,8}[Me₃SiO_{1/2}]_{3,5}[IOSiO_{3/2}]_{5,6}[EtO_{1/2}]_{3,6}[HO_{1/2}]_{0,3}, [MeSiO_{3/2}]₁₅ [Me₂SiO] _{1,7}[Me₃SiO_{1/2}]_{1,4}[MeO_{1/2}]_{2,8} [BuO_{1/2}]_{0,04}[HO_{1/2}]_{0,27} und [PhSiO_{3/2}]_{7,4}[Me₂SiO]_{1,5}[MeO_{1/2}]_{1,3}[BuO_{1/2}]_{0,03}[HO_{1/2}]_{0,14}, wobei Me gleich Methylrest, Et gleich Ethylrest, IO gleich Isooctylrest, Ph gleich Phenylrest und Bu gleich Butylrest bedeutet.

Die erfindungsgemäß hergestellten Organopolysiloxane können für alle Zwecke verwendet werden, für die auch bisher Organopolysiloxane eingesetzt worden sind, wie z.B. im Bautenschutz, im Coating-Bereich, in Kosmetik-Produkten, im Bereich Textil sowie Papier. Insbesondere eignen sie sich zur Herstellung von Emulsionen und als Bindemittel zur Herstellung von Farben und Lacke.

Das erfindungsgemäße Verfahren hat den Vorteil, dass es einfach in der Durchführung ist und Organopoylsiloxane mit einer hohen Ausbeute hergestellt werden können.

Das erfindungsgemäße Verfahren hat den Vorteil, dass das gegebenenfalls verwendete wasserunlösliche organische Lösungsmittel, der Chlorwasserstoff sowie der Alkohol auf einfache Weise rückgewonnen werden können.

Mit Hilfe des erfindungsgemäßen Verfahrens werden Organopolysiloxane erhalten, welche auf Grund der vollkontinuierlichen Verfahrensweise eine sehr einheitliche Produktqualität und eine ausgesprochen hohe Lagerstabilität aufweisen.

Ein weiterer Vorteil des erfindungsgemäßen Verfahrens ist, dass Organopolysiloxane hergestellt werden können, die sehr chloridarm sind und einen geringen VOC Gehalt aufweisen.

Ferner hat das erfindungsgemäße Verfahren den Vorteil, dass Siloxane auf Grund der vollkontinuierlichen Verfahrensweise mit einer optimierten Raum/Zeit Ausbeute sehr kostengünstig herstellbar sind.

Das erfindungsgemäße Verfahren erlaubt eine sehr effektive Anlagenausnutzung, da der bei vielen Verfahren des Standes der Technik durch Vergelen der Anlagenteile hohe Reinigungsaufwand hier minimal ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die im Folgenden aufgeführten mittleren Summenformeln ergeben sich aus der Auswertung des ¹H-, ²⁹Si-NMR und GPC Spektoskopie (gegen Polystyrolstandard gemessen, unter Berücksichtigung des Gewichtsmittels Mw) des jeweiligen Produktes.

### Beispiel 1

In eine kontinuierlich betriebene Reaktionsloop mit einem Innenvolumen von 1,35 m³, wovon 0,85 m³ Entgasungsvolumen darstellen, und Naturumlauf werden kontinuierlich 1000 kg/h eines Chlorsilangemisches aus 900 kg/h Methyltrichlorsilan und 100 kg/h Dimethyldichlorsilan und 700 kg/h eines Gemisches aus Ethanol 638 kg/h und Wasser 62 kg/h zudosiert. Die Reaktionstemperatur beträgt 30-35°C der Überdruck beträgt etwa 100 bis 250 mbar und die mittlere Verweilzeit 20-24 Minuten. Während der Reaktion werden 350-400 kg/h Chlorwasserstoff freigesetzt, welcher der Chlorwasserstoff Rückgewinnungsanlage zugeführt wird. Zur Hydrolyse/Kondensation werden in eine zweite kontinuierlich betriebene Reaktionsloop mit einem Innenvolumen von 3,5 m³, einem Entgasungsvolumen von 0,5 m³ und einer Kreislaufpumpe mit 60 m³/h Förderleistung kontinuierlich 1340 kg/h des in der ersten Reaktionsloop erhaltenen HCl-konzentrierten Teilalkoxylates, 1570 kg/h Toluol und 267 kg/h Wasser in Strömungsrichtung vor der Kreiselpumpe zudosiert, wobei sich eine mittlere Verweilzeit für das Hydrolyse/Kondensationsreaktionsgemisch von 60 Minuten, einen Überdruck von 100 bis 250 mbar und eine Reaktionstemperatur zwischen 47 und 52°C einstellt.
Zu den 3177 kg/h des aus der zweiten Reaktionsloop geförderten Reaktionsgemisches werden in die Förderleitung unter guter Durchmischung 1600 kg/h Wasser kontinuierlich zugesetzt, um die Säurekonzentration auf ein unreaktives Maß zu reduzieren (HCl-Gehalt in der Säure-, Ethanol-, Wasserphase < 14 Gew.-%), so dass die Phasentrennung durchgeführt werden kann, ohne dass weitere Kondensationsschritte stattfinden.
Mit einem Dekanter werden vergelte Anteile aus dem Gemisch entfernt. Das gelfreie Gemisch wird kontinuierlich in einen liegenden Behälter mit einem Innenvolumen von 5m³ auf der einen Seite eindosiert. Auf der anderen Seite wird die obere von der unteren Phase voneinander getrennt abgeführt.

In weiteren Aufarbeitungsschritten wird die so erhaltene toluolische Harzphase in einer mit Füllkörpern betriebenen Destillationskolonne auf einen höheren Festgehalt aufkonzentriert, mit Natriumbicarbonat neutralisiert, mit Aktivkohle von katalytisch wirksamen Metallspuren befreit und anschließend über Filterhilfsmittel filtriert und am Dünnschichtverdampfer bei einer Temperatur von 120-190°C und 100 mbar Vakuum von flüchtigen Bestandteilen befreit. Das im Reaktionsschritt der Aufkonzentration und Dünnschichten anfallende Toluol wird im zweiten Reaktionsschritt (Hydrolyse/Kondensation) wieder eingesetzt. Die saure ethanolisch/wässrige Phase aus dem dritten Schritt (Phasentrennung) wird nach alkalisch stellen redestilliert und im ersten Reaktionsschritt wieder eingesetzt.

Es wird ein Organopolysiloxan mit einer durchschnittlichen Formel [MeSiO_{3/2}]_{35,1}[Me₂SiO]_{4,2}[EtO_{1/2}]_{3,3}[HO_{1/2}]_{1,5} erhalten.

## Patentansprüche

1. Verfahren zur Herstellung von Organopolysiloxanen, bei dem in einem ersten Schritt in einem Loop-Reaktor mit Naturumlauf kontinuierlich Chlorsilane mit 0,01 bis 0,7 Mol Wasser je Mol hydrolysierbaren Chlors und mit 0,2 bis 1,7 Mol Alkohol je Mol hydrolysierbaren Chlors umgesetzt werden, wobei das Molverhältnis Wasser zu Alkohol 0,005 bis 3,5 beträgt,
in einem zweiten Schritt das in der ersten Stufe erhaltene Reaktionsgemisch kontinuierlich gegebenenfalls mit einem in Wasser unlöslichen organischen Lösungsmittel mit einer Dichte von unter 0,9 kg/l vermengt und Wasser in Mengen von 0,2 bis 100 Mol Wasser je Mol Silicium-Komponente kontinuierlich zudosiert wird und
in einem dritten Schritt nach Beendigung der Reaktion des zweiten Schritts die wässrig-alkoholische Phase abgetrennt wird.

2. Verfahren nach Anspruch 1, **dadurch gekennzeichnet, dass** es sich bei den eingesetzten Chlorsilanen um solche der Formel
RₐSiCl₄₋ₐ (I)
handelt, wobei R gleich oder verschieden sein kann und einen einwertigen, SiC-gebundenen, gegebenenfalls substituierten Kohlenwasserstoffrest bedeutet und
a 0, 1, 2, 3 ist.

3. Verfahren nach Anspruch 1 oder 2, **dadurch gekennzeichnet, dass** im ersten Schritt Chlorsilane mit 0,01 bis 0,65 Mol Wasser je Mol hydrolysierbaren Chlors umgesetzt werden.

4. Verfahren nach einem oder mehreren der Ansprüche 1 bis 3, **dadurch gekennzeichnet, dass** im ersten Schritt Chlorsilane mit 0,35 bis 1,5 Mol Alkohol je Mol hydrolysierbaren Chlors umgesetzt werden.

5. Verfahren nach einem oder mehreren der Ansprüche 1 bis 4, **dadurch gekennzeichnet, dass** im ersten Schritt Wasser zu Alkohol im Molverhältnis von 0,006 bis 2,0 eingesetzt wird.

6. Verfahren nach einem oder mehreren der Ansprüche 1 bis 5, **dadurch gekennzeichnet, dass** es sich bei den im ersten Schritt eingesetzten Alkoholen um Methanol, Ethanol oder Butanol handelt.

7. Verfahren nach einem oder mehreren der Ansprüche 1 bis 6, **dadurch gekennzeichnet, dass** im zweiten Schritt in Wasser unlösliches organisches Lösungsmittel eingesetzt wird.

## Claims

1. Process for the preparation of organopolysiloxanes, in which
in a first step, in a loop reactor with natural circulation, chlorosilanes are reacted continuously with from 0.01 to 0.7 mol of water per mole of hydrolyzable chlorine and with from 0.2 to 1.7 mol of alcohol per mole of hydrolyzable chlorine, the molar ratio of water to alcohol being from 0.005 to 3.5,
in a second step, the reaction mixture obtained in the first step is optionally mixed continuously with a water-insoluble organic solvent having a density of less than 0.9 kg/l, and water is metered in continuously in amounts of from 0.2 to 100 mol of water per mole of silicon component, and
in a third step, after the end of the reaction of the second step, the aqueous alcoholic phase is separated off.

2. Process according to Claim 1, **characterized in that** the chlorosilanes used are those of the formula
RₐSiCl₄₋ₐ (I),
in which R may be identical or different and is a monovalent, SiC-bonded, optionally substituted hydrocarbon radical and a is 0, 1, 2 or 3.

3. Process according to Claim 1 or 2, **characterized in that**, in the first step, chlorosilanes are reacted with from 0.01 to 0.65 mol of water per mole of hydrolyzable chlorine.

4. Process according to one or more of Claims 1 to 3, **characterized in that**, in the first step, chlorosilanes are reacted with from 0.35 to 1.5 mol of alcohol per mole of hydrolyzable chlorine.

5. Process according to one or more of Claims 1 to 4, **characterized in that**, in the first step, the molar water-to-alcohol ratio used is from 0.006 to 2.0.

6. Process according to one or more of Claims 1 to 5, **characterized in that** the alcohols used in the first step are methanol, ethanol or butanol.

7. Process according to one or more of Claims 1 to 6, **characterized in that**, in the second step, water-insoluble organic solvent is used.

## Revendications

1. Procédé pour la préparation d'organopolysiloxanes, dans lequel
dans une première étape on fait réagir en continu dans un réacteur à boucle à écoulement naturel des chlorosilanes avec 0,01 à 0,7 mole d'eau par mole de chlore hydrolysable et avec 0,2 à 1,7 mole d'alcool par mole de chlore hydrolysable, le rapport molaire de l'eau à l'alcool valant de 0,005 à 3,5,
dans une deuxième étape éventuellement on mélange en continu le mélange réactionnel, obtenu dans la première étape, avec un solvant organique insoluble dans l'eau, ayant une densité inférieure à 0,9 kg/l, et on ajoute en continu par addition dosée de l'eau en quantités de 0,2 à 100 moles d'eau par mole de composant silicié et
dans une troisième étape on sépare la phase aqueuse-alcoolique, une fois terminée la réaction de la deuxième étape.

2. Procédé selon la revendication 1, **caractérisé en ce que** les chlorosilanes utilisés sont ceux de formule
RₐSiCl₄₋ₐ (I)
dans laquelle R peut être le même ou différent et représente un radical hydrocarboné monovalent éventuellement substitué, lié par une liaison SiC, et
a est 0, 1, 2, 3.

3. Procédé selon la revendication 1 ou 2, **caractérisé en ce que** dans la première étape on fait réagir les chlorosilanes avec 0,01 à 0,65 mole d'eau par mole de chlore hydrolysable.

4. Procédé selon une ou plusieurs des revendications 1 à 3, **caractérisé en ce que** dans la première étape on fait réagir les chlorosilanes avec 0,35 à 1,5 mole d'alcool par mole de chlore hydrolysable.

5. Procédé selon une ou plusieurs des revendications 1 à 4, **caractérisé en ce que** dans la première étape l'eau est utilisée en un rapport molaire de 0,006 à 2,0 par rapport à l'alcool.

6. Procédé selon une ou plusieurs des revendications 1 à 5, **caractérisé en ce que** les alcools utilisés dans la première étape consistent en méthanol, éthanol ou butanol.

7. Procédé selon une ou plusieurs des revendications 1 à 6, **caractérisé en ce que** dans la deuxième étape on utilise un solvant organique insoluble dans l'eau.
